(19) **Europäisches Patentamt**

**European Patent Office**

**Office européen des brevets**

(11) **EP 1 140 471 B1**

(12) **EUROPEAN PATENT SPECIFICATION**

(45) Date of publication and mention
of the grant of the patent:
**08.09.2004 Bulletin 2004/37**

(51) Int Cl.⁷: **B29C 55/16**, B32B 27/32

(86) International application number:
**PCT/EP1999/009857**

(21) Application number: **99965451.0**

(22) Date of filing: **13.12.1999**

(87) International publication number:
**WO 2000/037240 (29.06.2000 Gazette 2000/26)**

(54) **PROCESS FOR MANUFACTURING A BI-AXIALLY ORIENTED, HEAT-SHRINKABLE, POLYOLEFIN MULTI-LAYER FILM AND FILM OBTAINED THEREBY**

VERFAHREN ZUR HERSTELLUNG EINER BIAXIAL ORIENTIERTEN, WÄRMESCHRUMPFBAREN, MEHRSCHICHTIGEN POLYOLEFINFOLIE UND DADURCH ERHALTENE FOLIE

PROCEDE DE FABRICATION D'UN FILM MULTICOUCHE DE POLYOLEFINE THERMORETRACTABLE ET A ORIENTATION BI-AXIALE ET FILM OBTENU PAR CE PROCEDE

(84) Designated Contracting States:
**AT BE CH CY DE DK ES FI FR GB GR IE IT LI LU MC NL PT SE**

(30) Priority: **18.12.1998 EP 98124109**

(43) Date of publication of application:
**10.10.2001 Bulletin 2001/41**

(73) Proprietor: **Cryovac, Inc.**
**Duncan, S.C. 29334 (US)**

(72) Inventor: **FORLONI, Roberto**
**I-20014 Garbatola di Nerviano (IT)**

(74) Representative: **De Carli, Elda**
**Sealed Air S.r.l.,**
**Via Trento 7**
**20017 Passirana di Rho (MI) (IT)**

(56) References cited:
**EP-A- 0 282 282          EP-A- 0 688 667**
**WO-A-96/33864          US-A- 4 343 852**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention refers to a process for the manufacture of a bi-axially oriented. heat-shrinkable, polyolefin, multi-layer film and to the film obtained thereby.

More particularly the present invention refers to a process for manufacturing a bi-axially oriented, heat-shrinkable polyolefin film comprising a first layer (A) comprising an ethylene-α-olefin copolymer and a second layer (B), which is an outer layer, comprising an ethylene or propylene homo- or co-polymer, which process comprises melt extrusion of the film polymers through a flat die and orientation of the obtained cast sheet simultaneously in the longitudinal and the transversal directions.

Bi-axially oriented, heat-shrinkable, multi-layer films are films that have been oriented by stretching in two perpendicular directions, typically the longitudinal or machine direction (MD) and the transverse or crosswise direction (TD), at a temperature higher than the highest Tg of the resins making up the film layers and lower than the highest melting point of at least one polymer of the film layers, i.e. at a temperature where the resins, or at least some of the resins, are not in the molten state.

Bi-axially oriented, heat-shrinkable, films are made by extruding polymers from a melt into a thick sheet that is quickly quenched to prevent or delay polymer crystallization, and then oriented by stretching under temperature conditions, as indicated above, where molecular orientation of the film occurs and the film does not tear. Upon subsequent reheating at a temperature close to the orientation temperature, the oriented, heat-shrinkable, film will tend to shrink in seeking to recover its original dimensional state.

Bi-axially oriented, heat-shrinkable polyolefin multi-layer films comprising a first layer (A) comprising an ethylene-α-olefin copolymer and a second layer (B), which is an outer layer, comprising an ethylene or propylene homo- or co-polymer, are known.

As an example US-A-4,532,189 describes a multi-layer, bi-axially oriented, heat-shrinkable film having a core layer comprising an ethylene-α-olefin copolymer of low or medium density and two outer layers preferably comprising a propylene-ethylene copolymer.

US-A-4,551,380 teaches a multi-layer, bi-axially oriented and cross-linked heat-shrinkable film having a core layer comprising an ethylene-α-olefin copolymer and two outer layers comprising a blend of different ethylene co-polymers.

In the above cited patents, the bi-axially oriented, heat-shrinkable, films are obtained by extruding the polymers through a round die to get a tubular thick film called "tape", that is immediately and quickly quenched by means of a water bath or cascade, re-heated, with or without prior irradiation, at the suitably selected orientation temperature and stretched bi-axially, while at this temperature, by the so-called "trapped bubble" technique that uses internal gas pressure to expand the diameter of the tape to form a large "bubble" and advancing the expanded tube at a faster rate than the extrusion rate so as to obtain transverse and machine directions of orientation respectively. The film is then cooled and rolled up in the cooled state so as to retain the property of heat-shrinkability.

WO-A-95/13,187 describes another process for the manufacture of bi-axially oriented, heat-shrinkable multi-layer films, including those described in the above patents, having at least one layer comprising an ethylene-α-olefin copolymer and showing more than one melting point in DSC. Said process provides for the extrusion of the polymers through a flat die in the form of a sheet, and after a quenching step and an optional irradiation step, for the heating of the sheet to the orientation temperature and the stretching thereof first longitudinally, by running the sheet over at least two series of pull rolls wherein the second set runs at a higher speed than the first one, and then transversally, by grasping the edges of the sheet by clips carried by two continuous chains running on two tracks that move wider apart as they go along.

The films obtained by this latter method distinguish from those obtainable by the trapped bubble technique in the thickness variation, that is always lower than 10 % and in the planarity, that is significantly more controlled. Higher stretching ratios can be employed in the orientation process, as MD stretching ratios of up to 9.5:1 and TD stretching ratios of up to 8.5:1 are reported in the examples of WO-A-95/13187, versus stretching ratios of up to 5:1 in MD and TD described for the comparative films prepared by the trapped bubble technique. Nonetheless the % free shrink of the obtained films is generally comparable to or lower than that of the films obtained by the trapped bubble technique, thus showing a decreased "efficiency" of the stretching. Furthermore the free shrink of the films thus obtained is much less balanced in the two directions (MD and TD) than that of the films obtained by the trapped bubble technique.

Simultaneous stretching of a continuous traveling flat sheet in the longitudinal and transversal directions is a technique known in the literature since many years. US-A-2,923,966, issued in 1960, described an apparatus for carrying out such a simultaneous flat stretching. The apparatus there claimed comprised two endless conveyors, positioned on the two sides of the web and disposed along divergent paths, said conveyors being formed of a plurality of links pivotally interconnected at their ends to provide a lazy-tongue structure and carrying a series of spaced clips to grip the web edges.

The use of endless loop linear motor systems for the simultaneous stretching of a continuous traveling flat sheet has later been described, e.g. in US-A-3,890,421, and improvements thereto, with particular reference to the problem of controlling synchronism, have been described in e.g. US-A-4,825,111, US-A-4,853,602, and US-A-5,051,225.

Actually there are various commercial simultaneous bi-axial film tenters.

These are however employed for the manufacture of heat-stable, generally monolayer films, particularly bi-axially oriented polyethylene terephthalate (BO-PET) and bi-axially oriented polyamide (BO-PA).

None of these apparatuses has been employed or tested for the manufacture of heat-shrinkable multi-layer films.

It has now been found that it is possible to obtain a bi-axially oriented, heat-shrinkable polyolefin film comprising a first layer (A) comprising an ethylene-α-olefin copolymer and a second layer (B), which is an outer layer, comprising an ethylene or propylene homo- or copolymer, said film having a total free shrink at 120°C of from about 30 to about 170% and a difference of less than 15 between the % free shrink in machine direction and the % free shrink in transverse direction, by carrying out the stretching step simultaneously in both directions by means of a simultaneous tenter frame, and that the film thus obtained not only has a thickness variation less than 10 % and a very good planarity but also more balanced shrink properties. It has also been found that by submitting a cast sheet obtained by extrusion through a flat die and comprising a first layer (A) comprising an ethylene-α-olefin copolymer and a second layer (B), which is an outer layer, comprising an ethylene or propylene homo- or co-polymer to a simultaneous tenter orientation, an increase in the stretching efficiency, evaluated as the ratio between the % free shrink in one direction and the stretching ratio in that direction, is obtained in comparison with a sequential stretching under the same conditions.

A higher stretching efficiency, coupled with the possibility offered by the tenter orientation of using higher stretching ratios, allows the manufacture of a film with a very high free shrink. In the packaging of a relatively rigid product which is not distorted by forces produced by a shrinking film, it is generally desirable to provide a heat-shrinkable packaging film with as high a free shrink as possible, in order to provide the "tightest" possible packaging over the product and/or to provide the desired shrink at a lower temperature. The polyolefin films obtained according to the present invention have a high free shrink, thereby enabling improved product appearance over a film having a lower free shrink.

A first object of the present invention is therefore a process for manufacturing a bi-axially oriented, heat-shrinkable polyolefin film comprising a first layer (A) comprising an ethylene-α-olefin copolymer and a second layer (B), which is an outer layer, comprising an ethylene or propylene homo- or co-polymer, which process comprises extrusion of the film resins through a flat die and bi-axial orientation of the obtained cast sheet simultaneously in the two perpendicular directions.

A second object of the present invention is a bi-axially oriented, heat-shrinkable polyolefin film comprising a first layer (A) comprising an ethylene-α-olefin copolymer and a second layer (B), which is an outer layer, comprising an ethylene or propylene homo- or copolymer, said film having a total free shrink at 120°C of from about 30 to about 170% and a difference of less than 15 between the % free shrink in machine direction and the % free shrink in transverse direction, whenever obtained by a process comprising extrusion through a flat die and bi-axial orientation of the obtained cast sheet simultaneously in two perpendicular directions.

DEFINITIONS

As used herein, the term "film" is used in a generic sense to include plastic web, regardless of whether it is film or sheet. Typically, films of and used in the present invention have a thickness of 150 µm or less, preferably they have a thickness of 100 µm or less, more preferably a thickness of 75 µm or less, still more preferably a thickness of 50 µm or less, and yet, still more preferably, a thickness of 30 µm or less.

As used herein, the phrases "inner layer" and "internal layer" refer to any layer having both of its principal surfaces directly adhered to another layer of the film.

As used herein, the phrase "outer layer" refers to any layer of film having only one of its principal surfaces directly adhered to another layer of the film

As used herein, the phrase "inside layer" refers to the film outer layer that is closest to the product, relative to the other layers of the multi-layer film.

As used herein, the phrase "outside layer" refers to the film outer layer, of a multi-layer film packaging a product, which is furthest from the product relative to the other layers of the multi-layer film.

As used herein, the phrases "seal layer", "sealing layer", "heat seal layer", and "sealant layer", refer to an outer layer involved in the sealing of the film to itself, to another layer of the same or another film, and/or to another article which is not a film. With respect to packages having only fin-type seals, as opposed to lap-type seals, the phrase "sealant layer" generally refers to the inside layer of a package.

As used herein, the term "core", and the phrase "core layer", refer to any internal layer which preferably has a function other than serving as an adhesive or compatibilizer for adhering two layers to one another.

As used herein, the phrase "tie layer" refers to any internal layer having the primary purpose of adhering two layers to one another. Preferred polymers for use in tie layers include, but are not restricted to, ethylene-unsaturated acid copolymer, ethylene-unsaturated ester copolymer, anhydride-grafted polyolefin, and mixtures thereof.

As used herein, the phrase "thickness variation" refers to the percent value obtained by measuring the maximum and minimum thickness of the film, calculating the average thickness value and applying these numbers to the following formula:

$$\text{Thickness variation (\%)} = \frac{\text{film thickness}_{(max)} - \text{film thickness}_{(min)}}{\text{film thickness}_{(avg)}} \times 100.$$

The maximum and minimum thicknesses are determined by taking a total of 10 thickness measurements at regular distance intervals along the entirety of the transverse direction of a film sample, recording the highest and lowest thickness values as the maximum and minimum thickness values, respectively, while the average value is determined by summing up the same 10 thickness measurements and dividing the result by ten. The thickness variation is then computed (as a percent value) using the formula above. A thickness variation of 0 % represents a film with no measurable differences in thickness. A thickness variation over 20 % is unacceptable industrially while a thickness variation below 10 % is a good value.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, the phrases "orientation ratio" and "stretching ratio" refer to the multiplication product of the extent to which the plastic film material is expanded in the two directions perpendicular to one another, i.e. the machine direction and the transverse direction.

As used herein, the phrases "heat-shrinkable," "heat-shrink," and the like, refer to the tendency of the film to shrink upon the application of heat, i.e., to contract upon being heated, such that the size of the film decreases while the film is in an unrestrained state. As used herein said term refer to films with a total free shrink (i.e., free shrink in the machine direction plus free shrink in the transverse direction), as measured by ASTM D 2732, of at least 30 percent at 120 °C, more preferably at least 40 percent, still more preferably, at least 50 percent, and, yet still more preferably, at least 60 percent.

As used herein, the term "monomer" refers to a relatively simple compound, usually containing carbon and of low molecular weight, which can react to form a polymer by combining with itself or with other similar molecules or compounds.

As used herein, the term "co-monomer" refers to a monomer that is co-polymerized with at least one different monomer in a co-polymerization reaction, the result of which is a copolymer.

As used herein, the term "polymer" refers to the product of a polymerization reaction, and is inclusive of homo-polymers, and co-polymers.

As used herein, the term "homo-polymer" is used with reference to a polymer resulting from the polymerization of a single monomer, i.e., a polymer consisting essentially of a single type of mer, i.e., repeating unit.

As used herein, the term "co-polymer" refers to polymers formed by the polymerization reaction of at least two different monomers. For example, the term "co-polymer" includes the co-polymerization reaction product of ethylene and an α-olefin, such as 1-hexene. However, the term "co-polymer" is also inclusive of, for example, the co-polymerization of a mixture of ethylene, propylene, 1-hexene, and 1-octene. The term "co-polymer" is also inclusive of random co-polymers, block co-polymers, and graft co-polymers.

As used herein, terminology employing a "-" with respect to the chemical identity of a copolymer (e.g., "an ethylene-α-olefin copolymer"), identifies the co-monomers which are co-polymerized to produce the copolymer

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts. Heterogeneous polymers are useful in various layers of the film used in the present invention. Although there are a few exceptions (such as TAFMER™ linear homogeneous ethylene-α-olefin copolymers produced by Mitsui Petrochemical Corporation, using Ziegler-Natta catalysts), heterogeneous polymers typically contain a relatively wide variety of chain lengths and co-monomer percentages.

As used herein, the phrase "homogeneous polymer" refers to polymerization reaction products of relatively narrow molecular weight distribution and relatively narrow composition distribution. Homogeneous polymers are structurally different from heterogeneous polymers, in that homogeneous polymers exhibit a relatively even sequencing of co-monomers within a chain, a mirroring of sequence distribution in all chains, and a similarity of length of all chains, i.e., a narrower molecular weight distribution. Furthermore, homogeneous polymers are typically prepared using metallocene, or other single-site type catalysts, rather than using Ziegler Natta catalysts.

More particularly, homogeneous ethylene-$\alpha$-olefin copolymers may be characterized by one or more methods known to those of skill in the art, such as molecular weight distribution ($M_w/M_n$), composition distribution breadth index (CDBI), and narrow melting point range and single melt point behavior. The molecular weight distribution ($M_w/M_n$), also known as polydispersity, may be determined by gel permeation chromatography. The homogeneous ethylene-$\alpha$-olefin copolymers useful in this invention generally have ($M_w/M_n$) of less than 2.7; preferably from about 1.9 to about 2.5; more preferably, from about 1.9 to about 2.3. The composition distribution breadth index (CDBI) of such homogeneous ethylene-$\alpha$-olefin copolymers will generally be greater than about 70 percent. The CDBI is defined as the weight percent of the copolymer molecules having a co-monomer content within 50 percent (i.e., plus or minus 50%) of the median total molar co-monomer content. The CDBI of linear polyethylene, which does not contain a co-monomer, is defined to be 100%. The Composition Distribution Breadth Index (CDBI) is determined via the technique of Temperature Rising Elution Fractionation (TREF). CDBI determination clearly distinguishes the homogeneous copolymers used in the present invention (narrow composition distribution as assessed by CDBI values generally above 70%) from VLDPEs available commercially which generally have a broad composition distribution as assessed by CDBI values generally less than 55%. The CDBI of a copolymer is readily calculated from data obtained from techniques known in the art, such as, for example, temperature rising elution fractionation as described, for example, in Wild et. al., J. Poly. Sci. Poly. Phys. Ed., Vol. 20, p.441 (1982). Preferably, the homogeneous ethylene-$\alpha$-olefin co-polymers have a CDBI greater than about 70%, i.e., a CDBI of from about 70% to about 99%. In general, the homogeneous ethylene-$\alpha$-olefin co-polymers in the multi-layer films of the present invention also exhibit a relatively narrow melting point range, in comparison with "heterogeneous copolymers", i.e., polymers having a CDBI of less than 55%. Preferably, the homogeneous ethylene-$\alpha$-olefin copolymers exhibit an essentially singular melting point characteristic, with a peak melting point ($T_m$), as determined by Differential Scanning Calorimetry (DSC), of from about 60°C to about 110°C. Preferably the homogeneous copolymer has a DSC peak $T_m$ of from about 80°C to about 105°C. As used herein, the phrase "essentially single melting point" means that at least about 80%, by weight, of the material corresponds to a single $T_m$ peak at a temperature within the range of from about 60°C. to about 110°C, and essentially no substantial fraction of the material has a peak melting point in excess of about 115°C, as determined by DSC analysis. Melting information reported are second melting data, i.e., the sample is heated at a programmed rate of 10°C/min. to a temperature below its critical range. The sample is then reheated (2nd melting) at a programmed rate of 10°C/min. The presence of higher melting peaks is detrimental to film properties such as haze, and compromises the chances for meaningful reduction in the seal initiation temperature of the final film.

A homogeneous ethylene-$\alpha$-olefin copolymer can, in general, be prepared by the co-polymerization of ethylene and any one or more $\alpha$-olefins. Preferably, the $\alpha$-olefin is a $C_3$-$C_{20}$ $\alpha$-mono-olefin, more preferably, a $C_4$-$C_{12}$ $\alpha$-mono-olefin, still more preferably, a $C_4$-$C_8$ $\alpha$-mono-olefin. Still more preferably, the $\alpha$-olefin comprises at least one member selected from the group consisting of butene-1, hexene-1, and octene-1, i.e., 1-butene, 1-hexene, and 1-octene, respectively. Most preferably, the $\alpha$-olefin comprises octene-1, and/or a blend of hexene-1 and butene-1.

Processes for preparing and using homogeneous polymers are disclosed in U.S. Patent No. 5,206,075, U.S. Patent No. 5,241,031, and PCT International Application WO 93/03093, each of which is hereby incorporated by reference thereto, in its entirety. Further details regarding the production and use of homogeneous ethylene-$\alpha$-olefin copolymers are disclosed in WO-A-90/03414, and WO-A-93/03093.

Still another genus of homogeneous ethylene-$\alpha$-olefin copolymers is disclosed in U.S. Patent No. 5,272,236, to Lai, et. al., and U.S. Patent No. 5,278,272, to Lai, et. al.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, copolymers of an olefin and an non-olefinic co-monomer co-polymerizable with the olefin, such as vinyl monomers, modified polymers thereof, and the like. Specific examples include polyethylene homo-polymer, polypropylene homo-polymer, polybutene homo-polymer, ethylene-$\alpha$-olefin co-polymer, propylene-$\alpha$-olefin co-polymer, butene-$\alpha$-olefin co-polymer, ethylene-unsaturated ester co-polymer, ethylene-unsaturated acid co-polymer, (e.g. ethyl acrylate co-polymer, ethylene-butyl acrylate co-polymer, ethylene-methyl acrylate co-polymer, ethylene-acrylic acid co-polymer, and ethylene-methacrylic acid co-polymer), ionomer resin, polymethylpentene, etc.

As used herein the term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like.

As used herein, the phrase " ethylene-$\alpha$-olefin copolymer" refer to such heterogeneous materials as linear low density polyethylene (LLDPE), linear medium density polyethylene (LMDPE) and very low and ultra low density polyethylene (VLDPE and ULDPE); and homogeneous polymers such as metallocene-catalyzed EXACT™ linear ho-

mogeneous ethylene-$\alpha$-olefin copolymer resins obtainable from the Exxon Chemical Company, single-site AFFINITY™ linear homogeneous ethylene-$\alpha$-olefin copolymer resins obtainable from the Dow Chemical Company, and TAFMER™ linear homogeneous ethylene-$\alpha$-olefin copolymer resins obtainable from the Mitsui Petrochemical Corporation. All these materials generally include co-polymers of ethylene with one or more co-monomers selected from $C_4$ to $C_{10}$ $\alpha$-olefin such as butene-1, hexene-1, octene-1, etc. in which the molecules of the copolymers comprise long chains with relatively few side chain branches or cross-linked structures. The heterogeneous ethylene-$\alpha$-olefin co-polymer commonly known as LLDPE has a density usually in the range of from about 0.915 $g/cm^3$ to about 0.930 $g/cm^3$, that commonly known as LMDPE has a density usually in the range of from about 0.930 $g/cm^3$ to about 0.945 $g/cm^3$, while those commonly identified as VLDPE or ULDPE have a density lower than about 0.915 $g/cm^3$.

As used herein, the term "adhered" is inclusive of films which are directly adhered to one another using a heat-seal or other means, as well as films which are adhered to one another using an adhesive which is between the two films. As used herein, the phrase "directly adhered", as applied to layers, is defined as adhesion of the subject layer to the object layer, without a tie layer, adhesive, or other layer therebetween: In contrast, as used herein, the word "between", as applied to a layer expressed as being between two other specified layers, includes both direct adherence of the subject layer between to the two other layers it is between, as well as a lack of direct adherence to either or both of the two other layers the subject layer is between, i.e., one or more additional layers can be imposed between the subject layer and one or more of the layers the subject layer is between.

As used herein, the phrase "free shrink" refers to the percent dimensional change in a 10 cm x 10 cm specimen of film, when subjected to selected heat (i.e., at a certain temperature), with the quantitative determination being carried out according to ASTM D 2732, as set forth in the 1990 Annual Book of ASTM Standards, Vol. 08.02, pp.368-371. "Total free shrink" is determined by summing the percent free shrink in the machine direction with the percentage of free shrink in the transverse direction.

DETAILED DESCRIPTION OF THE INVENTION

The process according to the present invention is carried out by melt extruding the polymers or polymer blends used for each layer through a flat die, cooling quickly the multi-layer sheet exiting from the extrusion die by means of a chill roll, optionally irradiating the cast sheet thus obtained to get cross-linking, reheating this tape to the suitably selected orientation temperature, simultaneously stretching the heated tape in both directions, MD and TD, by any simultaneous tenter apparatus, optionally stabilizing the obtained bi-axially oriented heat-shrinkable film by an annealing step, and finally cooling the bi-axially oriented, heat shrinkable film thus obtained.

It has been found that the above process can satisfactorily be employed for the manufacture of bi-axially oriented, heat-shrinkable polyolefin films comprising at least a first layer (A) comprising an ethylene-$\alpha$-olefin copolymer and a second layer (B), which is an outer layer, comprising an ethylene or propylene homo- or co-polymer.

Ethylene-$\alpha$-olefin copolymers that can suitably be employed for the first layer (A) are heterogeneous and homogeneous ethylene-$\alpha$-olefin copolymers having a density of from about 0.880 $g/cm^3$ to about 0.940 $g/cm^3$, preferably from about 0.890 $g/cm^3$ to about 0.935 $g/cm^3$, more preferably from about 0.900 $g/cm^3$ to about 0.930 $g/cm^3$, and still more preferably from about 0.910 $g/cm^3$ to about 0.925 $g/cm^3$.

Preferably said first layer (A) will contain at least about 50 % by weight of one or more ethylene-$\alpha$-olefin copolymers, more preferably at least 60 % by weight of one or more ethylene-$\alpha$-olefin copolymers, still more preferably at least 70 % by weight of one or more ethylene-$\alpha$-olefin copolymers, and yet still more preferably at least 80 % by weight of one or more ethylene-$\alpha$-olefin copolymers. Other polymers that can be blended with the ethylene-$\alpha$-olefin copolymers in said first layer (A) are polyolefins compatible therewith, e.g. ethylene, propylene, and butene homo- or co-polymers.

Preferably, the ethylene-$\alpha$-olefin copolymer of the first layer (A) has a melt index of from about 0.3 to about 10 g/10 min, more preferably from about 0.5 to about 8 g/10 min, still more preferably from about 0.8 to about 7 g/10 min, even more preferably from about 1 to about 6 g/10 min (as measured by ASTM D1238).

Preferably, the first layer (A) has a thickness of from about 3 to about 50 $\mu$m, more preferably, from about 4 to about 30 $\mu$m, and, still more preferably, from about 5 to about 20 $\mu$m.

Preferably, the thickness of the first layer (A) is from about 15 to about 75 percent of the total thickness of the multi-layer film, more preferably, from about 20 to about 70 %, still more preferably, from about 25 to about 65 %, and yet still more preferably, from about 30 to about 60%.

Ethylene and propylene homo- or co-polymers that can suitably be employed for the second layer (B) include at least one member selected from the group consisting of polyethylene homo-polymer, heterogeneous or homogeneous ethylene-$\alpha$-olefin copolymer, ethylene-vinyl acetate co-polymer, ethylene-ethyl acrylate co-polymer, ethylene-butyl acrylate co-polymer, ethylene-methyl acrylate co-polymer, ethylene-acrylic acid co-polymer, ethylene-methacrylic acid co-polymer, polypropylene homo-polymer, propylene-ethylene co-polymer, propylene-ethylene-butene ter-polymer and propylene-butene-ethylene ter-polymer, whereas the first listed monomer in the sequence has co-polymerized in a higher weight percent than the second listed monomer, and the second monomer has co-polymerized in a higher weight percent than the third monomer, and blends thereof in any proportion.

Preferably said second layer (B) will comprise at least an ethylene- or propylene homo- or co-polymer selected from the group consisting of polyethylene homo-polymer having a density of from about 0.910 g/cm$^3$ to about 0.950 g/cm$^3$, heterogeneous or homogeneous ethylene-α-olefin copolymer having a density of from about 0.900 g/cm$^3$ to about 0.940 g/cm$^3$, more preferably of from about 0.910 g/cm$^3$ to about 0.935 g/cm$^3$, yet more preferably of from about 0.915 g/cm$^3$ to about 0.930 g/cm$^3$, ethylene-vinyl acetate copolymer comprising from about 3 to about 28 % vinyl acetate comonomer, preferably, from about 5 to about 20 % vinyl acetate comonomer, more preferably, from about 8 to about 18 % vinyl acetate copolymer and still more preferably, from about 12 to about 18 % vinyl acetate comonomer, polypropylene homo-polymer, propylene-ethylene co-polymer with an ethylene content typically lower than 25 % by weight, preferably lower than 15 % by weight and even more preferably lower than 12 % by weight, propylene-ethylene-butene ter-polymer, and propylene-butene-ethylene ter-polymer with a total ethylene and butene content typically lower than 40 % by weight, preferably lower than 30 % by weight, and even more preferably lower than 20 % by weight.

Even more preferably said second layer (B) will comprise at least an ethylene- or propylene co-polymer selected from the group consisting of heterogeneous or homogeneous ethylene-α-olefin copolymer having a density of from about 0.910 g/cm$^3$ to about 0.935 g/cm$^3$, propylene-ethylene co-polymer with an ethylene content lower than 15 % by weight, propylene-ethylene-butene ter-polymer, and propylene-butene-ethylene ter-polymer with a total ethylene and butene content lower than 30 % by weight.

Particularly when said second layer (B) is used as the film sealing layer, the ethylene- or propylene homo- or co-polymer used therein has preferably a melting point less than about 135 °C, more preferably, less than 130°C, and still more preferably, less than about 125°C.

Said second layer (B) will comprise one or more ethylene- or propylene homo- or co-polymers as defined above in an amount of at least about 60 by weight, preferably at least about 70 % by weight, more preferably at least about 80 % by weight, and still more preferably at least about 90 % by weight. Additional polymers may be blended thereto in an amount that conversely is up to about 40 by weight, preferably up to about 30 % by weight, more preferably up to about 20 % by weight, and still more preferably up to about 10 % by weight. Preferred additional polymers include polybutene homo-polymers, butene-α-olefin copolymers, ionomers, and modified polyolefins.

In one preferred embodiment, said second layer (B) comprises a blend of different ethylene-α-olefin copolymers with a density of from about 0.910 g/cm$^3$ to about 0.935 g/cm$^3$ optionally blended with ethylene-vinyl acetate copolymer; in another preferred embodiment, said second layer (B) comprises a propylene-ethylene copolymer, optionally blended with polypropylene homo-polymer; in yet another preferred embodiment said second layer (B) comprises a propylene-ethylene-butene ter-polymer or a propylene-butene-ethylene ter-polymer optionally blended with polypropylene homo-polymer and/or propylene-ethylene copolymer.

The ethylene- or propylene homo- or co-polymer of the second layer (B) preferably has a melt index of from about 0.1 to about 20 g/10 min, more preferably from about 0.5 to about 10 g/10 min, still more preferably from about 0.8 to about 8 g/10 min, even more preferably from about 1 to about 6 g/10 min.

Preferably, the second layer (B) has a thickness of from about 2 to about 30 μm, more preferably, from about 3 to about 20 μm, and, still more preferably, from about 4 to about 15 μm.

Preferably, the thickness of the second layer (B) is from about 5 to about 50 percent of the total thickness of the multi-layer film, more preferably, from about 8 to about 40 %, still more preferably, from about 10 to about 30 %, and yet still more preferably, from about 15 to about 25 %.

When the film contains only two layers, also the first layer (A) comprising an ethylene-α-olefin copolymer is an outer layer. In such a case, preferred ethylene-α-olefin copolymers for said outer first layer (A) are those having a density above 0.900 g/cm$^3$ and/or a melting temperature (measured by DSC) above about 100 °C. Still in such a case, said outer first layer (A) will be the upper layer of the web traveling in the tenter apparatus, whereas the second layer (B), comprising an ethylene or propylene homo- or co-polymer will be the web layer closer to the tenter surface.

In a preferred aspect of the invention, layers which are adjacent or directly adhered to one another are of differing polymeric composition. Thus in case of a two layer film the polymer composition of the first layer (A) and of the second layer (B) will preferably be different.

The ethylene or propylene homo- or co-polymer employed for the second layer (B) will be preferably selected from ethylene homo-polymers with a density above 0.910 g/cm$^3$, ethylene-α-olefin copolymers having a density above 0.915 g/cm$^3$, propylene homo-polymers, propylene-ethylene copolymers, and propylene-ethylene-butene ter-polymers or propylene-butene-ethylene ter-polymers.

In a preferred embodiment of the invention the simultaneous orientation process is employed for the manufacture of a bi-axially oriented heat-shrinkable polyolefin film comprising at least 3 layers, a first layer (A), which is an internal layer, and comprises an ethylene-α-olefin copolymer, a second layer (B), which is an outer layer, comprising an ethylene or propylene homo- or co-polymer, and a third layer (C), which is the other outer layer, comprising an ethylene or propylene homo- or co-polymer as defined above for the outer layer (B).

When the first layer (A), comprising an ethylene-$\alpha$-olefin copolymer, is an internal layer, the ethylene-$\alpha$-olefin copolymer is preferably selected among the co-polymers having a density of from about 0.880 g/cm$^3$ to about 0.935 g/cm$^3$, preferably of from about 0.890 g/cm$^3$ to about 0.930 g/cm$^3$, and even more preferably of from about 0.895 g/cm$^3$ and about 0.925 g/cm$^3$.

In such a case the first layer (A) comprising an ethylene-$\alpha$-olefin copolymer, which is an internal layer, will preferably contain at least about 50 % by weight of one or more ethylene-$\alpha$-olefin copolymers, more preferably at least 60 % by weight of one or more ethylene-$\alpha$-olefin copolymers, and still more preferably at least 70 % by weight of one or more ethylene-$\alpha$-olefin copolymers. Preferably said layer will contain an amount up to about 50 % by weight, preferably up to about 40 % by weight and even more preferably up to about 30 % by weight of recycle material from the manufacture of polyolefin films. When orientation is carried out by means of a tenter, in fact the film edges that have been clipped during orientation need to be trimmed off at the end of the process before the end bi-axially oriented heat-shrinkable film is wound up. These trimmed edges are then collected, pelletized and recycled, preferably in-line In a most preferred embodiment, therefore, said recycle material will come from the manufacture of the same film and the scrap recycle will be carried out in-line.

The resin composition of the second layer (B) and that of the third layer (C), i.e., of the two film outer layers, may be the same of different. In a preferred embodiment of the invention however the resin composition of the second layer (B) and that of the third layer (C), are the same. Still in said preferred embodiment these two outer layers may however differ in the presence and possibly in the amount of additives admixed with the resins.

In all the film layers, not only in the outer layers, the polymer components may in fact contain appropriate amounts of additives normally included in such compositions. These include slip and anti-block agents such as talc, waxes, silica, and the like, antioxidants, fillers, pigments and dyes, cross-linking inhibitors, cross-linking enhancers, UV absorbers, antistatic gents, anti-fog agnts or compositions, and the like additives known to those skilled in the art of packaging films.

The bi-axially oriented, heat-shrinkable, multi-layer polyolefin film prepared in accordance with the present invention can have any total thickness desired, so long as the film provides the desired properties for the particular packaging operation in which the film is used, e.g. optics, modulus, seal strength, etc.. In a most preferred embodiment however the thickness of the film is lower than 30 $\mu$m; typically it is comprised between about 7 and about 25 $\mu$m; and even more preferably between about 8 and about 19 $\mu$m.

Also the number of layers is not critical but preferably the film will comprise up to a total of 9 layers, more preferably up to a total of 7 layers, and still more preferably, up to a total of 5 layers.

Additional inner layers can in fact be added to the 3-layer structure (C)/(A)/(B) described above e.g. to increase the bulk of the overall structure and/or further improve the shrink and/or the mechanical properties of the film, etc. as known in the art. Suitable polyolefin resins for said additional intermediate layers include for instance ethylene homo- or co-polymers, particularly ethylene-vinyl acetate copolymers, ethylene-alkyl acrylate or ethylene-alkyl methacrylate copolymers, ionomers, ethylene-$\alpha$-olefin copolymers with a low density or very low density, and the like resins. In some cases it may also be convenient to use the scrap to be recycled for one or more discrete intermediate layers.

Tie layers may also be present with the primary purpose of adhering two layers to one another, e.g. to improve the adhesion of the first layer (A) to the second outer layer (B), and/or the third outer layer (C). Preferred polymers for use in tie layers include, but are not restricted to, ethylene-vinyl acetate, ethylene-alkyl acrylate copolymer, anhydride-grafted polyolefin, and mixtures thereof.

In general, the layers of the film can consist of a single polymer, or can have still additional polymers together therewith, i.e., blended therewith.

The process according to the present invention involves feeding the solid polymer beads for at least the first layer (A) and the second layer (B) to separate extruders, where the polymer beads are melted and then forwarded into a flat extrusion die where the molten resins of the layers are combined to give the desired sequence. The obtained cast sheet, that is preferably from about 0.2 mm to about 3 mm thick, is then chilled on a chill roll, typically with the aid of an air knife that keeps the sheet in contact with the chill roll. Preferably the chill roll is partially immersed in a water bath at a low temperature (e.g. from about 5 to about 60 °C). Alternatively the cooling step can be carried out by using a liquid-knife as described in WO-A-95/26867 where a continuous and substantially uniform layer of water or of any other cooling liquid flows onto the surface of the sheet that does not contact the chill roll. Any other known means for cooling the cast web can however be employed.

The cooled sheet is then optionally fed through an irradiation unit, typically comprising an irradiation vault surrounded by a shielding, the flat sheet is irradiated with high energy electrons (i.e., ionizing radiation) from an iron core transformer accelerator. Irradiation is carried out to induce cross-linking. The flat sheet is preferably guided through the irradiation vault on rolls. It is thus possible by suitably combining the number of rolls and the path of the traveling web within the irradiation unit to get more than one exposure of the sheet to the ionizing radiation. Preferably, the sheet is irradiated to a level of from about 10 to about 200 kGy, more preferably of from about 15 to about 150 kGy, and still more preferably of from about 20 to about 120 kGy, wherein the most preferred amount of radiation is dependent upon the polymers employed and the film end use. While irradiation is preferably carried out on the extruded cast sheet just before orientation, as described above, it could also be carried out, alternatively or additionally, during or after orientation.

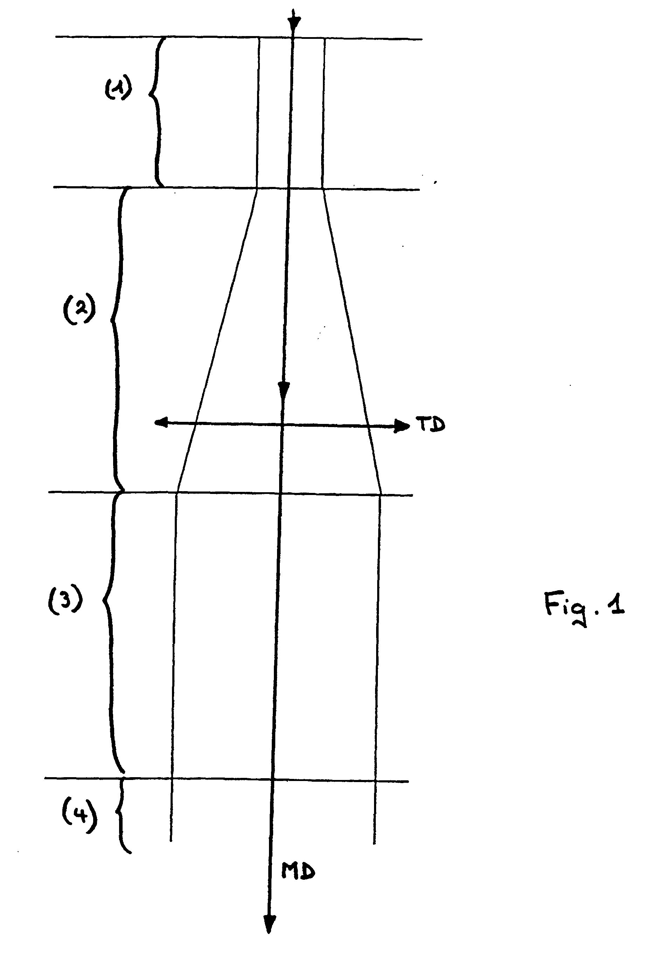

The optionally irradiated cast sheet is then fed to the pre-heating zone of the simultaneous tenter apparatus. With reference to Figure 1, the pre-heating zone is indicated as (1). The temperature of the oven in said pre-heating zone, the length thereof and the time spent by the traveling web in said zone (i.e. the web speed) can suitably be varied in order to bring the sheet up to the desired temperature for bi-axial orientation. In a preferred embodiment the orientation temperature is comprised between about 100 °C and about 140 °C and the temperature of the pre-heating zone is kept between about 110 °C and about 150 °C. In said pre-heating zone the sheet is clipped but it is not yet stretched.

Thereafter, the resulting hot, optionally irradiated, and clipped sheet is directed to the stretching zone of the simultaneous tenter, indicated in Figure 1 as (2). Any stretching means can be used in said zone, provided a simultaneous stretching of the sheet in the machine and the transverse direction is obtained. Preferably however the clips are propelled throughout the opposed loops of the tenter frame by means of a linear synchronous motor. A suitable line for simultaneous stretching with linear motor technology has been designed by Brueckner GmbH and advertised as LISIM® line. The configuration of the tenter can be varied depending on the stretching ratios desired. Using a synchronous linear motor tenter, the stretching ratios that can be applied are generally comprised between about 3:1 and about 10:1 for MD stretching and between about 3:1 and about 10:1 for TD stretching. Preferably however stretching ratios of at least about 4:1 in both directions are applied, wherein stretching ratios of at least about 5:1 are more preferred, and stretching ratios of at least about 6:1 are even more preferred. The temperature in the stretching zone is kept close to the selected orientation temperature. The stretched film is then transferred in a relaxation or annealing zone, indicated in Figure 1 as (3) heated to a temperature of about 70-90 °C. Following the annealing step the film is transferred to a cooling zone, indicated in Figure 1 as zone (4), where generally air, either cooled or kept at the ambient temperature, is employed to cool down the film. The temperature of said cooling zone is therefore typically comprised between about 20 and about 40 °C. At the end of the line, the edges of the film, that were grasped by the clips and have not been oriented, are trimmed off and the obtained bi-axially oriented, heat-shrinkable polyolefin film is then wound up, with or without prior slitting of the film web to the suitable width.

The bi-axially oriented, heat-shrinkable polyolefin film comprising at least a first layer (A) comprising an ethylene-α-olefin copolymer and a second layer (B). which is an outer layer, comprising an ethylene or propylene homo- or co-polymer, obtained by the above process, has a total free shrink, at 120 °C, of from about 30 to about 170 percent, preferably, from about 40 to about 160 percent, more preferably, from about 50 to about 150 percent, still more preferably, from about 60 to about 140 percent, and still more preferably, from about 70 to about 130 percent. The free shrink properties of the thus obtained film are more balanced in the two directions and differences of less than 15, preferably less than 10, and even more preferably less than 5, between the % free shrink in MD and the % free shrink in TD are obtained.

The film thus obtained also exhibits a shrink tension in either directions of at least 40 psi, and preferably of at least 50 psi. Shrink tension is measured in accordance with ASTM D 2838.

The film thus obtained has a thickness variation of less than 10 percent, preferably less than 8 percent, and more preferably less than 5 percent.

The obtained film may then be subjected to a corona discharge treatment to improve the print receptivity characteristics of the film surface. As used herein, the phrases "corona treatment" and "corona discharge treatment" refer to subjecting the outer surfaces of the film to a corona discharge treatment, i.e., the ionization of a gas such as air in close proximity to a film surface, the ionization initiated by a high voltage passed through a nearby electrode, and causing oxidation and other changes to the film surface, such as surface roughness. Corona treatment of polymeric materials is disclosed in e.g. US-A-4,120,716.

The invention is further illustrated by the following examples, which are provided for the purpose of representation, and are not to be construed as limiting the scope of the invention. Unless stated otherwise, all percentages, parts, etc. are by weight.

Example 1

A three-layer, heat-shrinkable film with the following layer arrangement (C)/(A)/(B) and a thickness ratio of 1/2/1 is produced by the general process described above. In particular, the temperature of the chill roll is kept at 15-25 °C and the extruded sheet is pinned to the chill roll by means of an air knife. The thickness of the cast extruded sheet before orientation is about 0.7 mm and the linear speed of the quenched sheet is about 8 m/min. The sheet is irradiated before orientation to 27 kGray by means of a scan beam unit operated at 500 kVolt. The sheet is passed twice under the irradiation window to provide for a uniform cross-linking. The temperature in the pre-heating zone is kept between about 120 and about 130 °C. The stretching ratios applied are 6:1 in MD and 8:1 in TD and the temperature in the stretching zone is maintained between about 110 and about 120 °C. The annealing step is carried out at about 80-85 °C and the cooling step at about 30-35 °C. After cooling, the film edges are trimmed off and the film is wound onto a roll at a speed of about 45-48 m/min.

The resins employed for the various layers were as follows:

(A) Heterogeneous ethylene-octene copolymer with a density of 0.920 g/cm$^3$ and a melt index of 1.0 g/10 min (Dowlex™ 2045 by The Dow Chemical Company)

(B) 50.1 % of a heterogeneous ethylene-octene copolymer with a density of 0.920 g/cm$^3$ and a melt index of 1.0 g/10 min (Dowlex™ 2045 by The Dow Chemical Company);

24.8 % of a heterogeneous ethylene-octene copolymer with a density of 0.935 g/cm$^3$ and a melt index of 2.6 g/10 min (Dowlex™ SC 2101 by The Dow Chemical Company);

24.6 % of ethylene-vinyl acetate copolymer (4.5 % of vinyl acetate content) with a density of 0.926 g/cm$^3$ and a melt index of 2.0 g/10 min (Escorene™ LD 362 BW by Exxon Chemical Company); and 0.5 % of slip and anti-block agents.

(C) As (B) above.

The thus obtained film has a thickness of 15 μm.

The thickness variation is less than 10 %, and the free shrink is higher than 120.

Example 2

A three-layer, heat-shrinkable film with the following layer arrangement (C)/(A)/(B) and a thickness ratio of 1/3/1 is produced by the general process described above. In particular, the temperature of the chill roll is kept at 20-30 °C and the extruded sheet is pinned to the chill roll by means of an air knife. The thickness of the sheet is about 0.7 mm and the linear speed of the quenched sheet is about 7 m/min. The sheet is not irradiated. The temperature in the pre-heating zone is kept between about 130 and about 140 °C. The stretching ratios applied are 6:1 in MD and 6:1 in TD and the temperature in the stretching zone is maintained between about 120 and about 130 °C. The annealing step is carried out at about 80-90 °C and the cooling step at about 30-35 °C. After cooling, the film edges are trimmed off and the film is wound onto a roll at a speed of about 40-42 m/min.

The resins employed for the various layers were as follows:

(A) Heterogeneous ethylene-octene copolymer with a density of 0.920 g/cm$^3$ and a melt index of 1.0 g/10 min (Dowlex™ 2045 by The Dow Chemical Company)

(B) 87.5 % of a propylene-ethylene copolymer with 3.5 % of ethylene and a melt index of 5.6 g/10 min (Eltex™ KS409 by Solvay);

12.1 % of polypropylene homopolymer with a density of 0.904 g/cm$^3$ and a melt index of 3.0 g/10 min (Profax™ PD064 by Montell); and 0.4 % of slip and anti-block agents.

(C) As (B) above.

The thus obtained film has a thickness of 19 μm.

The thickness variation is less than 10 %, and the free shrink is higher than 110.

Example 3

A three-layer, heat-shrinkable film with the following layer arrangement (C)/(A)/(B) and a thickness ratio of 1/3/1 is produced by substantially the same process described in Example 2.

The resins employed for the various layers are as in Example 2 but the propylene-ethylene copolymer of layers (B) and (C) is replaced by a propylene-ethylene-butene ter-polymer containing about 90-94 % propylene with a melt index of 5.0 g/10 min (Eltex™ PKS 309 by Solvay).

Example 4

A three-layer, heat-shrinkable film with the following layer arrangement (C)/(A)/(B) and a thickness ratio of 1/2/1 is produced by the same process described in Example 1.

The resins employed for the various layers were as follows:

(A) 90 % of a heterogeneous ethylene-octene copolymer with a density of 0.920 g/cm$^3$ and a melt index of 1.0 g/10 min (Dowlex™ 2045 by The Dow Chemical Company); and

10 % of recycle material from the trim edges of the multi-layer film of Example 1.

(B) 50.1 % of a heterogeneous ethylene-octene copolymer with a density of 0.920 g/cm$^3$ and a melt index of 1.0 g/10 min (Dowlex™ 2045 by The Dow Chemical Company);

24.8 % of a heterogeneous ethylene-octene copolymer with a density of 0.935 g/cm$^3$ and a melt index of 2.6 g/10 min (Dowlex™ SC 2101 by The Dow Chemical Company);

24.6 % of ethylene-vinyl acetate copolymer (4.5 % of vinyl acetate content) with a density of 0.926 g/cm$^3$ and a melt index of 2.0 g/10 min (Escorene™ LD362 BW by the Exxon Chemical Company); and 0.5 % of slip and anti-block agents.

(C) As (B) above.

Example 5

A three-layer, heat-shrinkable film with the following layer arrangement (C)/(A)/(B) and a thickness ratio of 1/2/1 is produced by the same process of Example 2.

The resins employed for the various layers were as follows:

(A) 70 % of a heterogeneous ethylene-octene copolymer with a density of 0.920 g/cm$^3$ and a melt index of 1.0 g/10 min (Dowlex™ 2045 by The Dow Chemical Company); and

30 % of recycle material from the trim edges of the multi-layer film of Example 2.

(B) 87.5 % of a propylene-ethylene copolymer with 3.5 % of ethylene and a melt index of 5.6 g/10 min (Eltex™ KS 409 by Solvay);

12.1 % of polypropylene homopolymer with a density of 0.904 g/cm$^3$ and a melt index of 3.0 g/10 min (Profax™ PD064 by Montell); and

0.4 % of slip and anti-block agents.

(C) As (B) above.

Example 6

A three-layer, heat-shrinkable film with the following layer arrangement (C)/(A)/(B) and a thickness ratio of 1/3/1 is produced by the same process described in Example 2. The composition of the film layers is the same as in Example 1 with the only difference that the outer layer (C), that is the film layer that in packaging will be closest to the product, also comprises 2 % of an anti-fog composition comprising glycerol mono-oleate and polyethoxylated fatty alcohols.

Example 7

The process of Example 1 has been repeated with the only difference that the irradiation step has been avoided.

Example 8

A four layer, heat-shrinkable film with the following layer arrangement (C)/(D)/(A)/(B) and a thickness ratio of 1/1/3/1 is produced by the general process described in Example 7.

The resins employed for the various layers were as follows:

(A) Heterogeneous ethylene-octene copolymer with a density of 0.920 g/cm$^3$ and a melt index of 1.0 g/10 min (Dowlex™ 2045 by The Dow Chemical Company)

(B) 50.1 % of a heterogeneous ethylene-octene copolymer with a density of 0.920 g/cm$^3$ and a melt index of 1.0 g/10 min (Dowlex™ 2045 by The Dow Chemical Company);

24.8 % of a heterogeneous ethylene-octene copolymer with a density of 0.935 g/cm$^3$ and a melt index of 2.6 g/10 min (Dowlex™ SC 2101 by The Dow Chemical Company);

24.6 % of ethylene-vinyl acetate copolymer (4.5 % of vinyl acetate content) with a density of 0.926 g/cm$^3$ and a melt index of 2.0 g/10 min (Escorene™ LD 362 BW by the Exxon Chemical Company); and 0.5 % of slip and anti-block agents.

(C) As (B) above.

(D) Recycle material from the trim edges of the multi-layer film of Example 7.

The films obtained according to the present invention can be used in the packaging of food and not food products as known in the art. To this purpose they can be used in the flat form to be wrapped up around the product to be packaged or they may be first converted into bags or pouches by conventional techniques well known to the person skilled in the art. They can also be coupled or laminated to other films or sheets to obtain a packaging material of improved performance.

Although the present invention has been described in connection with the preferred embodiments, it is to be understood that modifications and variations may be utilized without departing from the principles and scope of the invention, as those skilled in the art will readily understand. Accordingly, such modifications may be practiced within the scope of the following claims.

**Claims**

1. A process for manufacturing a bi-axially oriented, heat-shrinkable, polyolefin film comprising a first layer (A) comprising an ethylene-α-olefin copolymer and a second layer (B), which is an outer layer, comprising an ethylene or propylene homo- or co- polymer, said film having a total free shrink at 120°C of from about 30 to about 170% and a difference of less than 15 between the % free shrink in machine detection and the % free shrink in transverse direction, which process comprises extrusion of the film resins through a flat die and bi-axial orientation of the obtained cast sheet simultaneously in two perpendicular directions.

2. The process of claim 1 wherein the ethylene-α-olefin copolymer of the first layer (A) is selected from the group consisting of heterogeneous and homogeneous ethylene-α-olefin copolymers having a density of from about 0.880 $g/cm^3$ to about 0.940 $g/cm^3$, preferably from about 0.890 $g/cm^3$ to about 0.935 $g/cm^3$, more preferably from about 0.900 $g/cm^3$ to about 0.930 $g/cm^3$, and still more preferably about 0.910 $g/cm^3$ to about 0.925 $g/cm^3$.

3. The process of claim 1 wherein said first layer (A) contains at least about 50, preferably at least about 60, more preferably at least about 70, and yet still more preferably at least about 80 % by weight of one or more ethylene-α-olefin copolymers.

4. The process of claim 1 wherein the thickness of the first layer (A) is from about 15 to about 75 percent of the total thickness of the multi-layer film, more preferably, about 20 to about 70 %, still more preferably, about 25 to about 65 %, and yet still more preferably, about 30 to about 60 %.

5. The process of claim 1 wherein the ethylene or propylene homo- or co-polymers of the second layer (B) is selected from the group consisting of polyethylene homo-polymer, heterogeneous or homogeneous ethylene-α-olefin co-polymer, ethylene-vinyl acetate co-polymer, ethylene-ethyl acrylate co-polymer, ethylene-butyl acrylate co-polymer, ethylene-methyl acrylate co-polymer, ethylene-acrylic acid co-polymer, ethylene-methacrylic acid co-polymer, polypropylene homo-polymer, propylene-ethylene co-polymer, propylene-ethylene-butene ter-polymer and propylene-butene-ethylene ter-polymer and blends thereof in any proportion.

6. The process of claim 5 wherein said ethylene- or propylene homo- or co-polymer is selected from the group consisting of polyethylene homo-polymer having a density of from about 0.910 $g/cm^3$ to about 0.950 $g/cm^3$. heterogeneous or homogeneous ethylene-α-olefin copolymer having a density of from about 0.900 $g/cm^3$ to about 0.940 $g/cm^3$, preferably of from about 0.910 $g/cm^3$ to about 0.935 $g/cm^3$, more preferably of from about 0.915 $g/cm^3$ to about 0.930 $g/cm^3$, ethylene-vinyl acetate copolymer comprising from about 3 to about 28 % vinyl acetate comonomer, preferably from about 5 to about 20 % vinyl acetate comonomer, more preferably, from about 8 to about 18 % vinyl acetate copolymer and still more preferably, from about 12 to about 18 % vinyl acetate comonomer, polypropylene homo-polymer, propylene-ethylene co-polymer with an ethylene content lower than 25 % by weight, preferably lower than 15 % by weight and even more preferably lower than 12 % by weight, propylene-ethylene-butene ter-polymer, and propylene-butene-ethylene ter-polymer with a total ethylene and butene content lower than 40 % by weight, preferably lower than 30 % by weight, and more preferably lower than 20 % by weight.

7. The process of claim 6 wherein said ethylene- or propylene homo- or co-polymer is selected from the group consisting of heterogeneous or homogeneous ethylene-α-olefin copolymer having a density of from about 0.910 $g/cm^3$ to about 0.935 $g/cm^3$, propylene-ethylene co-polymer with an ethylene content lower than 15 % by weight, propylene-ethylene-butene ter-polymer, and propylene-butene-ethylene ter-polymer with a total ethylene and butene content lower than 30 % by weight.

8. The process of claim 1 for manufacturing a bi-axially oriented heat-shrinkable polyolefin film comprising at least 3 layers, a first layer (A), which is an internal layer comprising an ethylene-α-olefin copolymer, a second layer (B),

which is an outer layer, comprising an ethylene or propylene homo- or co-polymer, and a third layer (C), which is the other outer layer, comprising an ethylene or propylene homo- or co-polymer.

9. The process of claim 8 wherein the resin composition of the second layer (B) and that of the third layer (C), is the same.

10. The process of claim 1 wherein the cast extruded sheet is bi-axially oriented with stretching ratios of from 3:1 up to 10: 1 in MD and from 3:1 up to 10:1 in TD, preferably at least 4:1, more preferably at least 5:1, and even more preferably at least 6:1 in both directions.

11. The process of claim 1 wherein the sheet is irradiated before stretching.

12. The process of claim 11 wherein the film is irradiated to a level of from about 10 to about 200 kGy, preferably of from about 15 to about 150 kGy, and more preferably of from about 20 to about 120 kGy.

13. The process of claim 1 wherein the stretching is carried out at a temperature of from about 100 °C to about 140 °C and the sheet is pre-heated at a temperature of from about 110 °C to about 150 °C.

14. The process of claim 13 wherein the bi-axially oriented film is submitted to a relaxation step at a temperature of from about 70 °C to about 90 °C.

15. A bi-axially oriented, heat-shrinkable, polyolefin multi-layer film comprising a first layer (A) comprising an ethylene-$\alpha$-olefin copolymer and a second layer (B), which is an outer layer, comprising an ethylene or propylene homo- or co-polymer, whenever obtained by the process of any of the preceding claims.

**Patentansprüche**

1. Verfahren zur Herstellung von biaxial orientierter, wärmeschrumpfbarer Polyolefinfolie, die eine erste Schicht (A), die Ethylen/$\alpha$-Olefin-Copolymer umfasst, und eine zweite Schicht (B) umfasst, die eine äußere Schicht ist, die Ethylen- oder Propylen-Homo- oder -Copolymer umfasst, wobei die Folie eine gesamte freie Schrumpfung bei 120°C von etwa 30 bis etwa 170 % und einen Unterschied von weniger als 15 zwischen der prozentualen freien Schrumpfung in Maschinenrichtung und der prozentualen freien Schrumpfung in Querrichtung hat, wobei das Verfahren Extrusion der Folienharze durch eine Flachdüse und biaxiale simultane Orientierung der erhaltenen Flachfolie in zwei zueinander senkrechten Richtungen umfasst.

2. Verfahren nach Anspruch 1, bei dem das Ethylen/$\alpha$-Olefin-Copolymer der ersten Schicht (A) ausgewählt ist aus der Gruppe bestehend aus heterogenen und homogenen Ethylen/$\alpha$-Olefin-Copolymeren mit einer Dichte von etwa 0,880 g/cm$^3$ bis etwa 0,940 g/cm$^3$, vorzugsweise etwa 0,890 g/cm$^3$ bis etwa 0,935 g/cm$^3$, insbesondere etwa 0,900 g/cm$^3$ bis etwa 0,930 g/cm$^3$ und bevorzugter etwa 0,910 g/cm$^3$ bis etwa 0,925 g/cm$^3$.

3. Verfahren nach Anspruch 1, bei dem die erste Schicht (A) mindestens etwa 50, vorzugsweise mindestens etwa 60, insbesondere mindestens etwa 70 und bevorzugter mindestens etwa 80 Gew.-% von einem oder mehreren Ethylen/$\alpha$-Olefin-Copolymeren enthält.

4. Verfahren nach Anspruch 1, bei dem die Dicke der ersten Schicht (A) etwa 15 bis etwa 75 % der Gesamtdicke der Mehrschichtfolie, insbesondere etwa 20 bis etwa 70 %, insbesondere etwa 25 bis etwa 65 % und bevorzugter etwa 30 bis etwa 60 % beträgt.

5. Verfahren nach Anspruch 1, bei dem die Ethylen- oder Propylen-Homo- oder -Copolymere der zweiten Schicht (B) ausgewählt sind aus der Gruppe bestehend aus Polyethylenhomopolymer, heterogenem oder homogenem Ethylen/$\alpha$-Olefin-Copolymer, Ethylen/Vinylacetat-Copolymer, Ethylen/Ethylacrylat-Copolymer, Ethylen/Butylacrylat-Copolymer, Ethylen/Methylacrylat-Copolymer, Ethylen/Acrylsäure-Copolymer, Ethylen/Methacrylsäure-Copolymer, Polypropylenhomopolymer, Propylen/Ethylen-Copolymer, Propylen/Ethylen/Buten-Terpolymer und Propylen/Buten/Ethylen-Terpolymer und Gemischen davon in beliebigen Anteilen.

6. Verfahren nach Anspruch 5, bei dem das Ethylen- oder Propylen-Homo- oder -Copolymer ausgewählt ist aus der Gruppe bestehend aus Polyethylenhomopolymer mit einer Dichte von etwa 0,910 g/cm$^3$ bis etwa 0,950 g/cm$^3$,

heterogenem oder homogenem Ethylen/$\alpha$-Olefin-Copolymer mit einer Dichte von etwa 0,900 g/cm$^3$ bis etwa 0,940 g/cm$^3$, vorzugsweise etwa 0,910 g/cm$^3$ bis etwa 0,935 g/cm$^3$, insbesondere etwa 0,915 g/cm$^3$ bis etwa 0,930 g/cm$^3$, Ethylen/Vinylacetat-Copolymer, das etwa 3 bis etwa 28 % Vinylacetatcomonomer, vorzugsweise etwa 5 bis etwa 20 % Vinylacetatcomonomer, insbesondere etwa 8 bis etwa 18 % Vinylacetatcomonomer und bevorzugter etwa 12 bis etwa 18 % Vinylacetatcomonomer umfasst, Polypropylenhomopolymer, Propylen/Ethylen-Copolymer mit einem Ethylengehalt unter 25 Gew.-%, vorzugsweise unter 15 Gew.-% und bevorzugter unter 12 Gew.-%, Propylen/Ethylen/Buten-Terpolymer und Propylen/Buten/Ethylen-Terpolymer mit einem gesamten Ethylen- und Butengehalt unter 40 Gew.-%, vorzugsweise unter 30 Gew.-% und insbesondere unter 20 Gew.-%.

7. Verfahren nach Anspruch 6, bei dem das Ethylen- oder Propylen-Homo- oder -Copolymer ausgewählt ist aus der Gruppe bestehend aus heterogenem oder homogenem Ethylen/$\alpha$-Olefin-Copolymer mit einer Dichte von etwa 0,910 g/cm$^3$ bis etwa 0,935 g/cm$^3$, Propylen/Ethylen-Copolymer mit einem Ethylengehalt unter 15 Gew.-%, Propylen/Ethylen/Buten-Terpolymer und Propylen/Buten/Ethylen-Terpolymer mit einem gesamten Ethylen- und Butengehalt unter 30 Gew.-%.

8. Verfahren nach Anspruch 1 zur Herstellung von biaxial orientierter wärmeschrumpfbarer Polyolefinfolie, die mindestens drei Schichten umfasst, eine erste Schicht (A), die eine innere Schicht ist, die Ethylen/$\alpha$-Olefin-Copolymer umfasst, eine zweite Schicht (B), die eine äußere Schicht ist, die Ethylen- oder Propylen-Homo- oder -Copolymer umfasst, und eine dritte Schicht (C), die die andere äußere Schicht ist, die Ethylen- oder Propylen-Homooder -Copolymer umfasst.

9. Verfahren nach Anspruch 8, bei der die Harzzusammensetzung der zweiten Schicht (B) und diejenige der dritten Schicht (C) die gleiche ist.

10. Verfahren nach Anspruch 1, bei dem die extrudierte Flachfolie mit Reckverhältnissen von 3:1 bis zu 10:1 in MD und 3:1 bis zu 10:1 in TD, vorzugsweise mindestens 4:1, insbesondere mindestens 5:1 und bevorzugter mindestens 6:1 in beiden Richtungen biaxial orientiert wird.

11. Verfahren nach Anspruch 1, bei dem die Folie vor dem Rekken bestrahlt wird.

12. Verfahren nach Anspruch 11, bei dem die Folie auf ein Niveau von etwa 10 bis etwa 200 kGy, vorzugsweise etwa 15 bis etwa 150 kGy und insbesondere etwa 20 bis etwa 120 kGy bestrahlt wird.

13. Verfahren nach Anspruch 1, bei dem das Recken bei einer Temperatur von etwa 100°C bis etwa 140°C durchgeführt wird und die Folie auf eine Temperatur von etwa 110°C bis etwa 150°C vorgeheizt wird.

14. Verfahren nach Anspruch 13, bei dem die biaxial orientierte Folie bei einer Temperatur von etwa 70°C bis etwa 90°C einer Relaxationsstufe unterworfen wird.

15. Biaxial orientierte, wärmeschrumpfbare Polyolefinmehrschichtfolie, die eine erste Schicht (A), die Ethylen/$\alpha$-Olefin-Copolymer umfasst, und eine zweite Schicht (B) umfasst, die eine äußere Schicht ist, die Ethylen- oder Propylen-Homo- oder -Copolymer umfasst, erhalten nach dem Verfahren gemäß einem der vorhergehenden Ansprüche.

## Revendications

1. Procédé pour fabriquer un film de polyoléfine thermorétractable à orientation biaxiale comprenant une première couche (A) comprenant un copolymère d'éthylène/$\alpha$-oléfine et une deuxième couche (B), qui est une couche extérieure, comprenant un homopolymère ou copolymère d'éthylène ou de propylène, ledit film ayant un retrait libre total à 120°C d'environ 30 à environ 170 % et une différence inférieure à 15 entre le pourcentage de retrait libre dans le sens machine et le pourcentage de retrait libre dans le sens travers, lequel procédé comprend l'extrusion des résines du film à travers une filière plate et l'orientation biaxiale de la feuille coulée obtenue, simultanément dans les deux directions perpendiculaires.

2. Procédé selon la revendication 1, dans lequel le copolymère d'éthylène/$\alpha$-oléfine de la première couche (A) est choisi dans le groupe constitué par les copolymères hétérogènes et homogènes d'éthylène/$\alpha$-oléfine ayant une masse volumique d'environ 0,880 g/cm$^3$ à environ 0,940 g/cm$^3$, de préférence d'environ 0,890 g/cm$^3$ à environ

0,935 g/cm$^3$, mieux encore d'environ 0,900 g/cm$^3$ à environ 0,930 g/cm$^3$, et plus particulièrement d'environ 0,910 g/cm$^3$ à environ 0,925 g/cm$^3$.

3. Procédé selon la revendication 1, dans lequel ladite première couche (A) contient au moins environ 50, de préférence au moins environ 60, mieux encore au moins environ 70, et plus particulièrement au moins environ 80 % en poids d'un ou plusieurs copolymères d'éthylène/α-oléfine.

4. Procédé selon la revendication 1, dans lequel l'épaisseur de la première couche (A) représente d'environ 15 à environ 75 % de l'épaisseur totale du film multicouche, mieux encore d'environ 20 à environ 70 %, plus particulièrement d'environ 25 à environ 65 %, et tout spécialement d'environ 30 à environ 60 %.

5. Procédé selon la revendication 1, dans lequel les homopolymères ou copolymères d'éthylène ou de propylène de la deuxième couche (B) sont choisis dans le groupe constitué par un homopolymère de polyéthylène, un copolymère hétérogène ou homogène d'éthylène/α-oléfine, un copolymère d'éthylène/acétate de vinyle, un copolymère d'éthylène/acrylate d'éthyle, un copolymère d'éthylène/acrylate de butyle, un copolymère d'éthylène/acrylate de méthyle, un copolymère d'éthylène/acide acrylique, un copolymère d'éthylène/acide méthacrylique, un homopolymère de polypropylène, un copolymère de propylène/éthylène, un terpolymère de propylène/éthylène/butène et un terpolymère de propylène/butène/éthylène, ainsi que leurs mélanges en des proportions quelconques.

6. Procédé selon la revendication 5, dans lequel ledit homopolymère ou copolymère d'éthylène ou de propylène est choisi dans le groupe constitué par un homopolymère de polyéthylène ayant une masse volumique d'environ 0,910 g/cm$^3$ à environ 0,950 g/cm$^3$, un copolymère hétérogène ou homogène d'éthylène/α-oléfine ayant une masse volumique d'environ 0,900 g/cm$^3$ à environ 0,940 g/cm$^3$, mieux encore d'environ 0,910 g/cm$^3$ à environ 0,935 g/cm$^3$, plus particulièrement d'environ 0,915 g/cm$^3$ à environ 0,930 g/cm$^3$, un copolymère d'éthylène/acétate de vinyle comprenant d'environ 3 à environ 28 % de comonomère acétate de vinyle, de préférence d'environ 5 à environ 20 % de comonomère acétate de vinyle, mieux encore d'environ 8 à environ 18 % de comonomère acétate de vinyle et plus particulièrement d'environ 12 à environ 18 % de comonomère acétate de vinyle, un homopolymère de polypropylène, un copolymère de propylène/éthylène ayant une teneur en éthylène inférieure à 25 % en poids, de préférence inférieure à 15 % en poids et mieux encore inférieure à 12 % en poids, un terpolymère de propylène/éthylène/butène, et un terpolymère de propylène/butène/éthylène ayant une teneur totale en éthylène et butène inférieure à 40 % en poids, de préférence inférieure à 30 % en poids et mieux encore inférieure à 20 % en poids.

7. Procédé selon la revendication 6, dans lequel ledit homopolymère ou copolymère d'éthylène ou de propylène est choisi dans le groupe constitué par un copolymère hétérogène ou homogène d'éthylène/α-oléfine ayant une masse volumique d'environ 0,910 g/cm$^3$ à environ 0,935 g/cm$^3$, un copolymère d'éthylène/propylène ayant une teneur en éthylène inférieure à 15 % en poids, un terpolymère de propylène/éthylène/butène, et un terpolymère de propylène/butylène/éthylène ayant une teneur totale en éthylène et butène inférieure à 30 % en poids.

8. Procédé selon la revendication 1 pour fabriquer un film de polyoléfine thermorétractable à orientation biaxiale comprenant au moins 3 couches, une première couche (A), qui est une couche interne, comprenant un copolymère d'éthylène/α-oléfine, une deuxième couche (B), qui est une couche extérieure, comprenant un homopolymère ou copolymère d'éthylène ou de propylène, et une troisième couche (C), qui est l'autre couche extérieure, comprenant un homopolymère ou copolymère d'éthylène ou de propylène.

9. Procédé selon la revendication 8, dans lequel la composition de résine de la deuxième couche (B) et celle de la troisième couche (C) sont identiques.

10. Procédé selon la revendication 1, dans lequel la feuille extrudée coulée est orientée biaxialement avec des rapports d'étirage de 3/1 à 10/1 dans le sens MD et de 3/1 à 10/1 dans le sens TD, de préférence d'au moins 4/1, mieux encore d'au moins 5/1, et plus particulièrement d'au moins 6/1 dans les deux directions.

11. Procédé selon la revendication 1, dans lequel la feuille est irradiée avant étirage.

12. Procédé selon la revendication 11, dans lequel le film est irradié à un taux d'environ 10 à environ 200 kGy, de préférence d'environ 15 à environ 150 kGy, et mieux encore d'environ 20 à environ 120 kGy.

13. Procédé selon la revendication 1, dans lequel l'étirage est effectué à une température d'environ 100°C à environ 140°C et la feuille est pré-chauffée à une température d'environ 110°C à environ 150°C.

**14.** Procédé selon la revendication 13, dans lequel le film à orientation biaxiale est soumis à une étape de relaxation à une température d'environ 70°C à environ 90°C.

**15.** Film de polyoléfine thermorétractable à orientation biaxiale comprenant une première couche (A) comprenant un copolymère d'éthylène/$\alpha$-oléfine et une deuxième couche (B), qui est une couche extérieure, comprenant un homopolymère ou copolymère d'éthylène ou de propylène, obtenu par le procédé de l'une quelconque des revendications précédentes.

Fig. 1